# EUROPEAN PATENT APPLICATION

(11) **EP 4 717 597 A1**
(43) Date of publication of application: **01.04.2026**
(21) Application number: 23209117.3
(22) Date of filing: 10.11.2023
(51) Int. Cl.: B64C 27/20, B64U 10/20

(54) **IN-FLIGHT ENGINE STALL DETECTION METHOD AND SYSTEM FOR AN ENGINE OF A VERTICAL TAKE-OFF AND LANDING AIRCRAFT**

(71) Applicant: Lilium eAircraft GmbH, 82234 Wessling (DE)
(72) Inventor: Wilkosz, Benjamin Eduard, 82234 Wessling (DE); Onodi, Peter, 82234 Wessling (DE)
(74) Representative: Ter Meer Steinmeister & Partner

(57) **Abstract**

The present invention relates to a method (10) of detecting engine stall in an engine (1100) of a vertical take-off and landing aircraft (2000) under flight conditions (FC). The engine (1100) comprises a rotor (1130). In the method (10), a rotor torque (M_rotor) and a rotor speed (n_rotor) of the rotor (1130) are acquired. Based thereon, a stall ratio (SR) between the acquired rotor torque (M_rotor) and rotor speed (n_rotor) is determined. The determined stall ratio (SR) is compared with a stall boundary (SB) for the engine (1100), which is based on the acquired rotor torque (M_rotor) and rotor speed (n_rotor), for detecting occurring engine stall. The result of the comparison is outputted as a detection result (DR). The invention relates further to a computer program product, a control system (100), a propulsion system (1000) and an aircraft (2000) utilizing and implementing said method (10).

## Description

The present invention relates to a method and a control system of detecting engine stall in an engine of a vertical take-off and landing aircraft under flight conditions. The invention also relates to a computer program product for carrying out the method with a computer, and a propulsion system and an aircraft, each with the control system.

The start and landing phase of an aircraft are critical stages of a flight. Therefore, high standards are set on the design and control of an aircraft's propulsion system.

For instance, both phases comprise periods, where the propulsion units are operated at low speeds and orientated under a relatively large angle of attack. These conditions make the propulsion units susceptible to developing stall inside the propulsion units. Therefore, operating parameters of the propulsion unit must be chosen carefully to avoid operating the propulsion unit outside operability limits and thus, to avoid stall.

Further, development of highly localized turbulent airflows can be observed at front parts of the air inlet of the propulsion unit during take-off and landing. The turbulent airflows can be caused by distorted inlet airflows, which can develop into vortices. The vortices can move downstream towards the compressor of the propulsion unit. If the vortices reach the compressor blades, they can cause a localized deviation of the angle of attack of compressor blades, thereby causing compressor stall. Compressor stall typically leads to pressure losses in the compressor, which reduce the amount of thrust being generated by the propulsion unit. Also, the propulsion unit can be damaged by the interaction with the vortices.

Similar phenomena can be observed when an airplane is flying close to the ground. Atmospheric turbulence, gusts of wind or crosswinds, can hit the propulsion unit at the air inlet and can either interact directly with airfoils inside the propulsion unit or cause development of turbulent airflows inside the propulsion unit, thus, each leading to stall.

Further causes of stall inside the propulsion unit can be damages of the propulsion unit following an impact with foreign objects. Such incidents can cause distortions of airflow inside the propulsion unit and plastically deform parts of the propulsion unit, which lead to distortions of the airflow inside the propulsion unit. The risk of an impact with foreign objects is higher when the aircraft is close to ground level.

Vertical take-off and landing aircrafts are particularly affected by the above-described circumstances surrounding the arising of stall. Typically, engines of such aircrafts are directed from a horizontal cruising position to a vertical landing position for take-off and landing. This can lead to steep angles of attack for the airfoils inside the individual engine. Also, the incoming airflow has an increased vulnerability to being distorted by crosswinds. Therein, it is to note that sudden loss of thrust in one or more engines of such aircrafts, temporary or otherwise, can have a more serious impact on flight safety than with aircrafts taking use of horizontal take-off or landing. This because in vertical take-off and landing processes, lift is generated almost exclusively by the engines and not by the wings. Hence, failure to supply sufficient levels of thrust can lead to abrupt altitude losses for this type of aircraft.

It is thus, an object of the present invention to provide a method and system for detecting stall occurring inside an individual engine of vertical take-off and landing aircrafts. Preferably, methods and systems of the invention also facilitate to control the affected engine in accordance to the detection result so that it can recover from the occurrence of stall inside.

The above-described problem is solved -at least partially- by the method of claim 1, the computer program product of claim 10, the control system of claim 11, the propulsion system of claim 12 and the aircraft of claim 15.

Further advantages and features of the invention can be derived from the dependent claims, the description, and the figures. Features and details described in connection with the method of the invention naturally also apply in connection with the computer program product of the invention, with the control system of the invention, with the propulsion system of the invention and with the aircraft of the invention, and vice versa, so that, with regard to the disclosure of the individual aspects of the invention, reference is and/or can always be made mutually.

A first aspect of the present invention relates to a method of detecting engine stall in an engine of a vertical take-off and landing aircraft under flight conditions. The engine comprises a rotor. The method comprises a step of acquiring a rotor torque and a rotor speed of the engine. A stall ratio between the acquired rotor torque and rotor speed is determined. The determined stall ratio is compared with a stall boundary for the engine for detecting occurring engine stall. The stall boundary is based on the acquired rotor torque and the acquired rotor speed. A detection result is outputted based on the comparison of the determined stall ratio with the stall boundary.

In other words, the invention provides a process for detecting engine stall in an engine of a vertical take-off and landing aircraft (in the following: VTOL aircraft) under flight conditions.

Therein, the expression "detecting stall" may be understood, for example, as identifying or discovering a presence or occurrence of stall. Further, in the context of this invention, the expression "engine stall" may be understood as a phenomenon that occurs when the airflow inside an engine, such as a fan or jet engine, becomes distorted or irregular. Engine stall may lead to a reduction or total loss of thrust. Engine stall may be caused by various factors, such as operating an engine outside its designed operational range, or operating the engine under an angle of attack, where the blades of the compressor exceed their critical angle of attack. Another factor may be impact with foreign objects, such as birds. Also, crosswinds or otherwise distorted inlet airflow may cause engine stall. Preferably, engine stall may comprise compressor stall and/or compressor surge. Further, an "engine" may be understood as a "propulsion unit" and/or generally as a thrust generating component of the aircraft. Moreover, the expression "under flight conditions" may be understood, for example, as being in an in-flight situation.

In the method, a rotor torque and a rotor speed of the rotor are acquired.

Therein, the expression "being acquired" may be understood, for example, as receiving data about the rotor torque and the rotor speed, which may be calculated data and/or may be data from a measurement. Alternatively, "being acquired" may be understood as taking measurements for determining the rotor torque and the rotor speed. Preferably, the acquired rotor torque and the acquired rotor speed may be actual time values. The rotor speed may be a rotational frequency, a tangential speed, angular speed or frequency. For example, the rotor speed may be provided in RPM.

A stall ratio between the rotor torque and the rotor speed is determined.

Therein, the expression "determine" may be understood, for example, as computing.

The stall ratio is compared with a stall boundary for the engine for detecting occurring engine stall. The stall boundary is based on the rotor torque and the rotor speed.

Therein, the expression "stall boundary" may be understood, for example, as limit, threshold or corridor for a maximum and/or minimum value of the stall ratio, at which the engine can be still operated without risking separation of airflow over blades. Further, the expression "occurrence of stall" may be understood as onset or presence of stall or at least of a distorted airflow inside the engine.

A detection result is outputted based on the comparison of the determined stall ratio with the stall boundary.

Thereby, the health and thrust levels of a single engine can be assessed in real-time. Therein, the invention uses the ratio between rotor torque and rotor speed cleverly as an indirect measure for thrust levels. This is particularly noteworthy as it is difficult to numerically describe the relationship between rotor torque and resulting thrust levels in simple terms. For instance, the inventors found that a low rotor torque generally corresponds with a low thrust level when taken in relation to the rotor speed. Accordingly, the invention allows to detect the occurrence of engine stall in an engine and thus, enables to take countermeasures against the sudden loss of thrust and controllability of the engine. The method also brings advantages specific for VTOL aircrafts, which typically comprise a plurality of distributed engines. For instance, engine stall can be detected for the individual engine so that the location of reduced thrust will be known, allowing to adapt not only the control of affected engines but also of the remaining engines for balancing the thrust output across the aircraft. Overall, safety of the aircraft can be improved with the method of the invention at all stages of the flight. All of these benefits can be achieved without having to provide expensive and heavy equipment for measurement and control.

According to a preferred embodiment, the engine of the aircraft may comprise different engine operation modes. The engine operation modes may comprise a cruising mode for propelling the aircraft in a cruising-motion along a substantially horizontal flight direction. The engine operation modes may further comprise a hovering mode for propelling the aircraft in a hovering-motion, a take-off-motion or a landing-motion along a substantially vertical direction as the flight direction. Preferably, the method may be configured to detect engine stall in the engine when the engine is in the hovering mode or when the engine transitions between the hovering mode and the cruising mode.

Thereby, the accuracy and the reliability of the method can be improved. For instance, during hovering of a VTOL aircraft or in a state of a VTOL aircraft near hovering, the relationship between the rotor torque and the resulting thrust is almost linear. In addition, in the hovering mode, typically rotor speed is low and rotor torque is high. Thus, sudden changes in the health of the engine can be made particularly visible in the stall ratio. Thus, the safety of a VTOL aircraft during hovering can be significantly improved.

According to a further preferred embodiment, the method may further comprise steps of acquiring the engine operation mode and determining the stall boundary. Therein, the stall boundary may be dependent on the acquired engine operation mode. Alternatively or additionally, the stall boundary may correspond to a ratio between the rotor torque and the rotor speed, which exist when the engine is at a stable operating point in the hovering mode.

Therein, the expression "operating point" may be understood as a specific point within the operation characteristic of the engine. The operation characteristic may be defined through pairs of rotor speed and of its corresponding rotor torque. At a stable operating point, the engine may be in a steady-state or equilibrium. For instance, small variations of the rotor speed or rotor torque will cause the engine to return to the stable operating point. Accordingly, ratios existing at stable operating points are particularly suitable as reference values for defining the stall boundary. Taking the engine operation mode into consideration for determining the stall boundary allows to improve sensitivity and accuracy of the detection method.

According to a preferred embodiment, the method may further comprise steps of acquiring the flight conditions and determining the stall boundary, with the stall boundary preferably being dependent on the acquired flight conditions. The flight conditions may comprise, for example, at least one of wind speed, air pressure, or speed over ground of the aircraft.

With this configuration, it is taken into consideration that rotor torque and rotor speed may change in correspondence with flight conditions and the flight envelop. Thus, reflecting this relationship in the stall boundary when determining the stall boundary, allows to improve sensitivity and accuracy of the detection method.

According to a further preferred embodiment, the stall boundary may define a corridor for the stall ratio, where no occurrence of engine stall may be expected. The corridor may comprise a lower stall boundary and an upper stall boundary. The corridor may be a symmetric or asymmetric interval. The corridor may include none, one or both of its interval defining endpoints. At least one of the lower stall boundary and the upper stall boundary may depend on the acquired rotor torque and rotor speed. Alternatively or additionally, the lower stall boundary and the upper stall boundary may be dependent on the acquired flight conditions and/or the acquired operation mode. Preferably, the stall boundary may be defined in a stall map. The stall map may be stored as a lookup-table.

Thereby, it is possible to define inoperability regions, where the engine may become inoperable for certain combinations of rotor torque and rotor speed. In particular, it is an advantage that such "keep out zones" can be mapped in experiments and thus, the sensitivity and accuracy of the detection method can be improved. As an alternative, it is also possible with this configuration to ensure that the method is only used in operational regions, where the proposed relationship between inlet distortion, thrust levels and stall ratio mirrors reality sufficiently accurately.

According to a preferred embodiment, the method may be configured to recover the engine from an engine stall occurrence by modifying a control parameter of the engine. For instance, the control parameter may be a demand set point of the rotor speed, a demand set point of the rotor torque and/or a demand set point of a rotor output power to be generated by the engine. Preferably, the method may further comprise a step of modifying said control parameter of the engine. Modifying the control parameter may preferably be based on the comparison of the determined stall ratio with the stall boundary. The method may further comprise a step of outputting said modified control parameter for controlling the engine. Preferably, the control parameter may be modified if the determined stall ratio is below or above the stall boundary. Preferably, modifying the control parameter may comprise to ramp, decrease or increase the control parameter linearly and/or continuously until the determined stall ratio is at, above and/or below the stall boundary.

Thereby, the method can be provided with means of counteracting the effects of impending or already starting loss of thrust generated by the engine due to engine stall. This may facilitate a recovery from in-operable regions of the engine, for example in the event of wind, impact with foreign objects or other cases. Due to the detection and modification of control parameters, the engine can be appropriately controlled such that airflows are re-attached and required stall ratios can be achieved. For instance, the engine can be ramped-up to re-attach the airflow.

According to a further preferred embodiment, the rotor torque of the rotor of the engine may be acquired by measuring the rotor torque with a torque sensor. Preferably, the torque sensor may be arranged on the rotor of the engine. Alternatively or additionally, the rotor torque of the rotor may be acquired by receiving an electric current reading representative of the rotor torque from an electric motor that drives the rotor of the engine for generating thrust. Alternatively, the reading may be supplied from a control unit of said electric motor.

Thereby, it is possible to acquire the rotor torque from a robust and non-intrusive measurement. Thus, the acquisition has no negative impact on thrust or operability of the engine. Moreover, by using a reading from the power train of the engine, costs relating to sensors and integrating them in the engine, as well as weight can be saved. In addition, the method relies on a way to acquire the rotor torque that is not vulnerable to impact with foreign bodies. By using a dedicated torque sensor in or on the rotor, for instance on the shaft and/or on a blisk, the acquisition can be made independent from electronic failures of the power train.

Alternatively, the rotor torque may be measured by a torque sensor and, in addition, may be acquired by receiving an electric current reading representative of the rotor torque from an electric motor that drives the rotor of the engine for generating thrust.

By measuring the rotor torque in two different ways in parallel, the torque measurement can be verified and electronic errors or measurement errors can be identified. Thus, the reliability and accuracy of the detection method can be improved.

According to a preferred embodiment, the aircraft may comprise at least two engines and the method may further comprise a step of acquiring the rotor torque and the rotor speed of each of the rotors of the engines or of at least two neighbouring engines. For instance, engine stall may have been detected for at least one of the engines or for at least one of the neighbouring engines. Preferably, the method may also comprise a step of acquiring a relative position of the engines with respect to each other. The method may further comprise a step of identifying an incorrect detection result for one or more of the engines. An incorrect detection result may be identified by comparing and/or cross-correlating the stall ratios of the respective engines with each other, respectively. Alternatively or additionally, an incorrect detection result may be identified by determining if a difference between the determined stall ratios exceeds an acceptable variation threshold. Preferably, it may be determined if the difference between the stall ratios in relation to the relative mounting position of the engines on the aircraft exceeds an acceptable variation threshold. Preferably, the respective incorrect detection result may be corrected before being output.

Therein, the expression "cross-correlating" may be understood as identifying a similarity between two signals. For instance, the stall ratios of the different engines may be analysed over a certain time so that a progress of the two signals may be analysed in the cross-correlation.

Thereby, it can be checked if neighbouring engines, which are more likely to show similar distortions of the inlet airflow, are similarly affected by engine stall. In case one of the engines shows no sign of occurring engine stall while the other engine shows clear signs of engine stall, the detection results may need further investigation and reliability checks, for instance, to exclude an error in the electronics. Accordingly, the reliability and accuracy of the detection method can be improved further.

A further aspect of the invention relates to a computer program product. The computer program product comprises instructions which, when the program is executed by a computer, cause the computer to carry out the steps of the above-described method.

A further aspect of the present invention relates to a control system for detecting engine stall in an engine of a vertical take-off and landing aircraft under flight conditions. The engine comprises a rotor. The control system comprises a receiving section for acquiring a rotor torque and a rotor speed of the rotor. Further, the control system comprises a determining section for determining a stall ratio between the acquired rotor torque and rotor speed. Also, the control system comprises a comparison section for comparing the determined stall ratio with a stall boundary for the engine, which is based on the acquired rotor torque and the acquired rotor speed, for detecting occurring engine stall. The control system comprises further an output section for outputting a detection result based on the comparison of the determined stall ratio with the stall boundary.

Preferably, the control system may be suitable and/or configured to implement and execute the steps of the above-described method. The control system may be part of a control unit for controlling the engine or it may be part of a flight controller of the aircraft. Alternatively, the control system may be a separate control unit. The control system may comprise sensors for acquiring the rotor speed and the rotor torque. Preferably, the control system may comprise a control section for modifying a control parameter of the engine in response to the detection result.

A further aspect of the invention relates to a propulsion system for a vertical take-off and landing aircraft. The propulsion system comprises at least one engine with a rotor. The propulsion system further comprises the above-described control system.

With the above-described computer program product, control system and propulsion system the same advantages and technical benefits can be derived as described above for the method of the invention.

According to a preferred embodiment, the propulsion system may comprise a plurality of the engines. The engines may be arranged on different mounting positions with respect to each other. Alternatively or additionally, the engine may be configured to be arranged movably, preferably swivably, between at least one hovering position and at least one cruising position on a wing of the aircraft. Preferably, the propulsion system may comprise a propulsion unit housing that may comprise at least two engine ducts. Preferably, each of the engine ducts may comprise or be arranged with one of the engines.

According to a further preferred embodiment, the engine may be an electrical fan engine. Preferably, the rotor may comprise a fan for conveying air into the propulsion unit housing or an engine housing of the engine. If provided, the air may be conveyed by the fan into the engine duct of the propulsion unit housing. The engine may further comprise a stator for compressing the conveyed air for generating thrust for propelling the aircraft.

With any one of such configurations, detection of engine stall can be improved as the relationship between the stall ratio and the loss of thrust becomes particularly prominent for VTOL aircrafts comprising a plurality of distributed engines that facilitate vertical take-off and landing by rotating or pivoting the engines.

A further aspect of the present invention relates to an aircraft for vertical take-off and landing. The aircraft comprises the above-described propulsion system.

According to a preferred embodiment, the aircraft may comprise two nose wings, such as canards, and two tail wings, such as main wings. Preferably, each of the wings may comprise at least one engine, which may be arranged to be movable, preferably swivable or pivotable, between at least one hovering position and at least one cruising position.

With the above-described VTOL aircrafts the same advantages and technical benefits can be derived as described above for the method and systems of the invention.

Further features, advantages and objects of the present invention will become apparent for the skilled person when reading the following detailed description of embodiments of the present invention and when taking in conjunction with the figures of the enclosed drawings. The figures show schematically:
- Figure 1: an embodiment of a method for detecting engine stall according to the invention,
- Figure 2: a further embodiment of the method according to the invention,
- Figure 3: a diagram illustrating the relationship between rotor speed, rotor torque and the stall boundaries,
- Figure 4: an embodiment of a control system and an embodiment of a propulsion system according to the invention,
- Figure 5A: a further embodiment of the propulsion system according to the invention, with the engine being in cruising mode,
- Figure 5B: the propulsion system of Figure 5A, with the engine being in hovering mode, and

- Figure 6: an embodiment of an aircraft according to the invention.

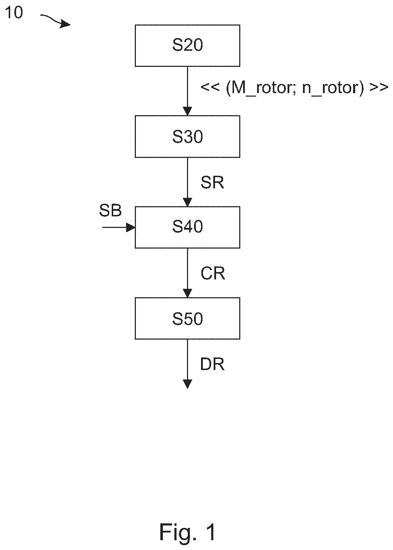

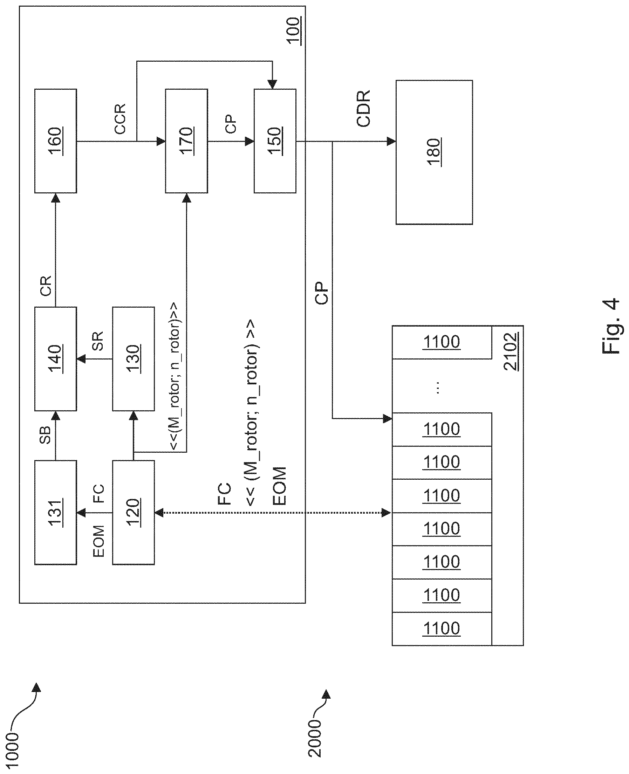

Figures 1 to 6 show different aspects and embodiments of the present invention. For instance, Figures 1 to 3 show different embodiments and aspects of a method 10 for detecting engine stall according to the invention. Figures 4 to 6 show different aspects and embodiments of a control system 100, a propulsion system 1000 and an aircraft 2000 according to the invention.

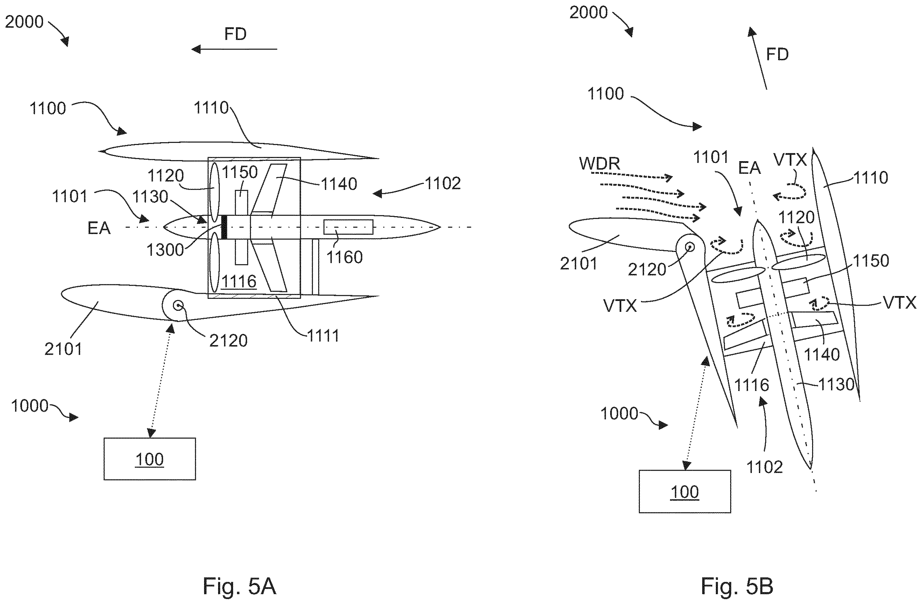

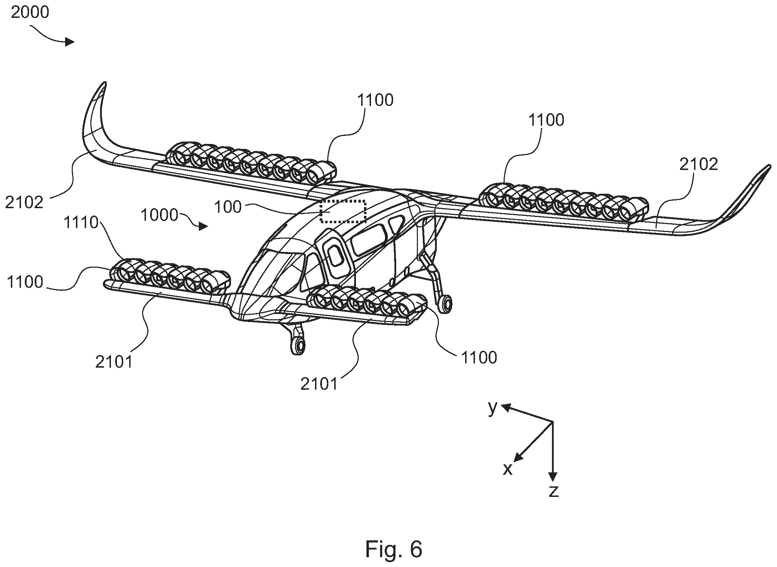

Figure 1 shows an exemplary illustration of the method 10 of detecting engine stall in an engine of a vertical take-off and landing aircraft under flight conditions FC. To support the understanding of the method 10 and the problems surrounding engine stall, the engine 1100 and the aircraft 2000 of Figures 5 and 6 are described:
Figures 5 and 6 show examples for possible designs of such engine 1100 for a VTOL aircraft and for such aircraft 2000. As can be taken from the exemplary Figures, the engine 1100 comprises a rotor 1130 driven by an electric motor 1150 for generating thrust for the aircraft 2000. A fan 1120 is arranged at a front portion of the rotor 1130 for accelerating air to an airflow. The engine 1100 preferably comprises an engine housing 1111. The illustrated engine housing 1111 is a containment ring. This is exemplarily illustrated in Figure 5A. Furthermore, the engine 1100 is preferably arranged inside a propulsion unit housing 1110. As exemplarily illustrated, the propulsion unit housing 1110 comprises an engine duct 1116 with an air inlet 1101 and an air outlet 1102. The propulsion unit housing 1110 is arranged on a wing of the aircraft 2000. This is exemplarily illustrated in Figures 5 and 6. Alternatively or additionally, the engine 1100 may comprise the propulsion unit housing 1110 and/or may be provided integral therewith. Thereby, air may be driven by the fan 1120 through the air inlet 1101 into the engine duct 1116. The engine 1100 comprises a single compressor stage, which is provided by a stator 1140. The stator 1141 compresses the drawn in air before ejecting it through air outlet 1102. In addition, the stator 1141 is capable of straightening the twisted airflow from the rotor 1130. The electric motor 1150 is arranged between the rotor 1130 and the stator 1141. The blades of the fan 1120 are arranged around a central longitudinal engine axis EA of the engine 1100. The engine 1100 may also comprise an engine control unit 1160.

Figure 6 further illustrates the arrangement of a plurality of the engines 1100 on wings of the aircraft 2000. The aircraft 2000 illustrated in Figure 6 comprises two canards 2101 and two main wings 2102. Each of the wings 2101, 2102 comprises several engines 1100. More specifically, as exemplarily illustrated in Figure 6, thirty engines 1100 preferably designed as electric ducted fans may be distributed and embedded in the rear of all four fixed wings, with twelve engines 1100 at the canard wings 2101 and eighteen engines 1100 at the main wings 2102.

To facilitate vertical take-off and landing, the engines 1100 of Figures 5 and 6 are arranged movably on the wings 2101, 2102 of the aircraft 2000 to adapt its flight direction FD. In particular, each of the engine 1100 is configured to be rotatable about an axis (shown as a pivot point 2120 on one of the wings 2101, 2102 in Figures 5). Alternatively, the engines 1100, received in the propulsion unit housing 1110, can be rotated by rotating the propulsion unit housing 1110. Thereby, the engine 1100 can take at least one hovering position (Figure 5B), in which the flight direction is substantially vertical, and at least one cruising position (Figure 5A), in which the flight direction is substantially horizontal. Accordingly, it is possible to operate the engine 1100 in different engine operation modes EOM, namely a cruising mode and a hovering mode.

Figure 5B does not show all features illustrated in Figure 5A to help with understanding the occurrence of stall events. Figure 5B illustrates how crosswinds or gusts of wind with a wind direction WDR transverse to the engine axis EA and to the flight direction FD can cause a local disturbance of airflow at the air inlet 1101. The disturbance may travel towards the stator 1140 and may develop into a vortex VTX, which can cause engine stall.

To detect such engine stall phenomena in the engine 1100, in Figure 1 a rotor torque M_rotor and a rotor speed n_rotor of the rotor 1130 of the engine 1100 are acquired in an acquiring step S20. For instance, a torque sensor 1300 or an electric current reading from the electric motor 1150 may be used to derive the rotor torque M_rotor. In case multiple engines 1100 are provided, a two-dimensional array «... » of values for the rotor torque M_rotor and rotor speed n_rotor for each of the engines 1100 may be derived. Subsequently, a stall ratio SR between the acquired rotor torque M_rotor and rotor speed n_rotor is determined for a respective engine in a determining step S30. Step 30 is followed by comparing step S40, where the determined stall ratio SR is compared with a stall boundary SB for the engine 1100, which is based on the acquired rotor torque M_rotor and rotor speed n_rotor, for detecting occurring engine stall. Subsequently, the detection results DR are outputted in outputting step S50. Preferably, all of these steps of the method 10 are done for every engine 1100 under investigation.

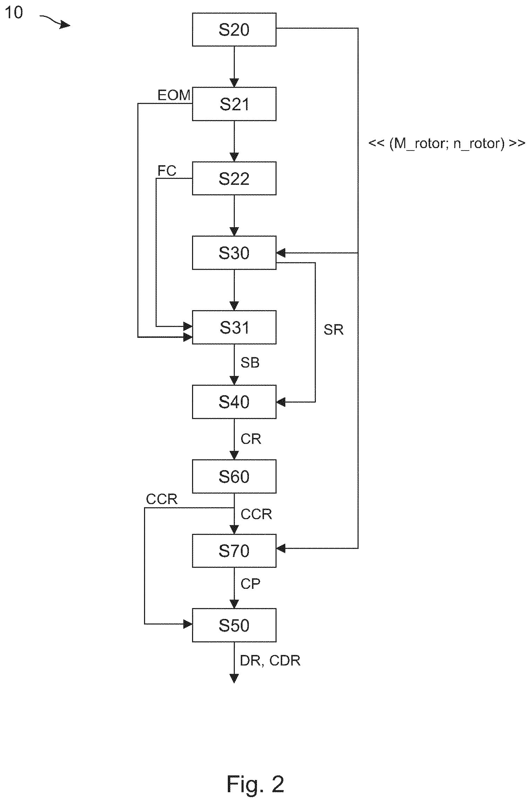

The exemplary method 10 of Figure 2 comprises all steps previously discussed in relation to Figure 1. In addition, the method 10 may comprise an acquiring engine mode step S21 and an acquiring flight conditions step S22 to acquire actual (concurrent) values for the engine operation mode EOM and the flight conditions FD that are currently present.

The flight conditions FD and the engine operation mode EOM may be used to determine the stall boundary SB in a determining boundary step S31. However, these parameters are only examples and do not form a complete enumeration.

Based on the determined or otherwise provided stall boundary SB, the comparison of the stall ratio SR of a respective engine 1100 is completed in step S40, providing a comparison result CR.

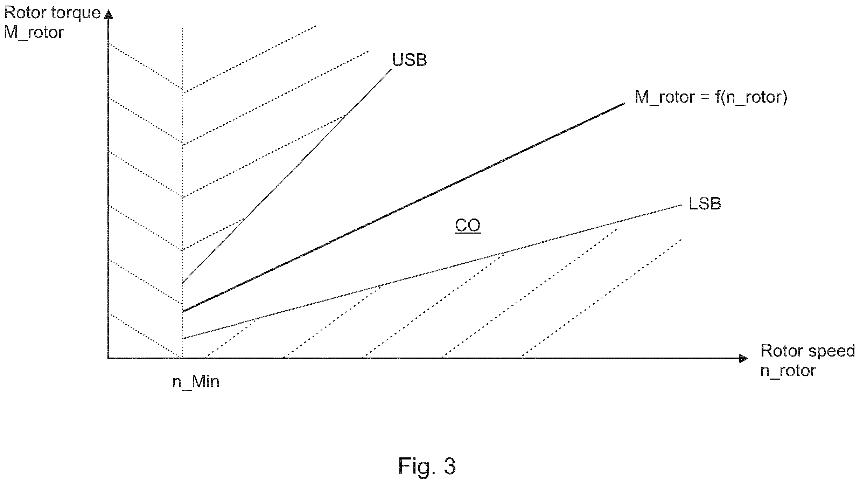

Figure 3 illustrates the relationship between the stall boundary SB and the stall ratio SR exemplarily. For instance, if the relationship between the rotor torque M_rotor and the rotor speed n_rotor can be considered to be linear, the stall boundary SB may be described by one or two linear functions defining a corridor CO with an upper stall boundary USB and a lower stall boundary LSB for the stall ratio SR. Inside the corridor CO no occurrence of engine stall may be expected. In Figure 3, "non-cross zones" are highlighted with hatching. Thus, it can be seen that the stall boundary SB depends on the acquired rotor torque M_rotor and rotor speed n_rotor. Preferably, different functions can be defined for shaping the corridor CO depending on the acquired flight conditions FC and/or the acquired engine operation mode EOM. Also, a minimal speed n_Min, to which the rotor 1130 needs to get before utilizing the method 10, may be comprised by the stall boundary SB. Thus, the stall boundary SB may comprise one or more thresholds and corridors CO for the stall ratio SR. The stall boundaries SB may form a stall map that can be preferably stored as a lookup-table.

Preferably, the comparison result CR may be cross-checked and/or verified regarding its plausibility. For this, a checking step S60 may be provided, where incorrect detection results DR for one or more of the engines 1100 may be identified by comparing and/or by cross-correlating the stall ratios SR of the respective engines 1100 with each other, respectively. For instance, for this checking process it may be useful that also the relative position of the engines 1100 can be acquired and taken into consideration. In case incorrect comparison results CR were identified in step S60, the comparison results may be corrected and outputted as a corrected detection result CDR (shown in Figure 4) or a corrected comparison result CCR (shown in Figure 2).

Further, the method 10 may further comprise a step S70, in which a control parameter CP of the engine 1100 may be adapted to recover the engine 1100 from an engine stall occurrence. For instance, if the determined stall ratio SR is outside the corridor CO of the stall boundary SB, a demand set point of the rotor speed n_rotor as the control parameter CP may be linearly or continuously ramped up, until the determined stall ratio SR is within the stall boundary SB. The modified control parameter CP may be outputted as a control signal for controlling the engine 1100.

Outputting step S50 may output all results and parameters derived during the method 10, such as the detection result DR and the corrected detection result CDR.

Further, it is also conceivable to implement the method 10 on a computer by providing a corresponding computer program product. While no visualisation of the computer program product is shown, Figures 1 to 3 show how the program can be implemented.

Figure 4 shows an exemplary configuration of the control system 100. The control system 100 comprises means, modules or sections suitable for implementing the aforementioned methods 10. For instance, to implement the method 10 illustrated in Figure 2, the control system 100 comprises receiving section 120 for acquiring the rotor torque M_rotor and the rotor speed n_rotor. Preferably, sections for acquiring the engine operation mode EOM and the flight conditions FC may be provided separately or as part of the receiving section 120. The control system 100 further comprises a determining section 130 for determining the stall ratio SR. It also comprises an optional determining boundary section 131 for determining the stall boundary SB in correlation with the flight conditions FC and the engine operation mode EOM. In a comparison section 140, the determined stall ratio SR is compared with the determined stall boundary SB. The comparison result CR may be outputted and passed on to an optional checking section 160, where the comparison results CR of multiple engines 1100 may be cross-checked and verified. The corrected comparison results CCR may be forwarded to a modifying section 170 for determining and modifying the control parameters CP of the engine 1100 and/or the aircraft 2000. The modifying section 170 may comprise a controller with a control algorithm, such as PID control. An output section 150 is provided for outputting the detection result DR or the corrected detection result CDR and preferably the control parameter CP. A display section 180 may be provided for visualizing these outputs for a user. The control system 100 may be connected with the engines 1100 or one of the wings 2101, 2102 of the aircraft 2000, on which the engines 1100 are arranged, through signal connections and/or mechanical connections. For instance, the engine control unit 1160 may comprise or be part of the control system 1000.

A further aspect of the invention relates to the aforementioned propulsion system 1000, which comprises at least one engine 1100 and the aforementioned control system 100. The propulsion system 1000 is illustrated in Figures 4 to 6 and comprised, for example, by the aircraft 2000.

The invention is not limited by the embodiments as described hereinabove, as long as being covered by the appended claims. All the features of the embodiments described hereinabove can be combined in any possible way and be provided interchangeably.

### Reference signs

- 10: method
- S20: acquiring step
- S21: acquiring engine mode step
- S22: acquiring flight conditions step
- S30: determining step
- S31: determining boundary step
- S40: comparing step
- S50: outputting step
- S60: checking step
- S70: modifying step

- 100: control system
- 120: receiving section
- 130: determining ratio section
- 131: determining boundary section
- 140: comparison section
- 150: output section
- 160: checking section
- 170: modifying section
- 180: display section

- 1000: propulsion system
- 1100: engine
- 1101: air inlet
- 1102: air outlet
- 1110: propulsion unit housing
- 1111: engine housing
- 1116: engine duct
- 1120: fan
- 1130: rotor
- 1140: stator
- 1150: electric motor
- 1300: torque sensor
- FD: flight direction
- EA: engine axis
- VTX: vortex
- WDR: wind direction

- 2000: aircraft
- 2101: nose wing
- 2102: tail wing
- 2120: pivot point

- FC: flight conditions
- M_rotor: rotor torque
- n_rotor: rotor speed
- SR: stall ratio
- SB: stall boundary
- CO: corridor
- USB: upper stall boundary
- LSB: lower stall boundary
- CR: comparison result
- CCR: corrected comparison result
- DR: detection result
- CDR: corrected detection result
- EOM: engine operation mode
- CP: control parameter
- n_Min: minimum speed

## Claims

1. Method (10) of detecting engine stall in an engine (1100) of a vertical take-off and landing aircraft (2000) under flight conditions (FC), the engine (1100) comprising a rotor (1130), the method (10) comprising:
acquiring a rotor torque (M_rotor) and a rotor speed (n_rotor) of the rotor (1130);
determining a stall ratio (SR) between the acquired rotor torque (M_rotor) and rotor speed (n_rotor);
comparing the determined stall ratio (SR) with a stall boundary (SB) for the engine (1100), which is based on the acquired rotor torque (M_rotor) and rotor speed (n_rotor), for detecting occurring engine stall; and
outputting a detection result (DR) based on the comparison of the determined stall ratio (SR) with the stall boundary (SB).

2. Method (10) according to claim 1, wherein the engine (1100) of the aircraft (2000) comprises different engine operation modes (EOM) comprising
- a cruising mode for propelling the aircraft (2000) in a cruising-motion along a substantially horizontal direction as its flight direction (FD), and
- a hovering mode for propelling the aircraft (2000) in a hovering-, take-off- or landing-motion along a substantially vertical direction as the flight direction (FD),
wherein preferably the method (10) is configured to detect engine stall in the engine (1100) when the engine (1100) is in the hovering mode or when the engine (1100) transitions between the hovering mode and the cruising mode.

3. Method (10) according to claim 2, further comprising:
acquiring the engine operation mode (EOM), and
determining the stall boundary (SB), wherein the stall boundary (SB) is dependent on the acquired engine operation mode (EOM), and/or corresponds to a ratio between the rotor torque (M_rotor) and the rotor speed (n_rotor) that exist for the engine (1100) being at a stable operating point in the hovering mode.

4. Method (10) according to any one of the preceding claims, further comprising:
acquiring the flight conditions (FC), which preferably comprise at least one of wind speed, air pressure, or speed over ground of the aircraft (2000), and
determining the stall boundary (SB), wherein the stall boundary (SB) is dependent on the acquired flight conditions (FC).

5. Method (10) according to any one of the preceding claims, wherein the stall boundary (SB) defines a corridor (CO) for the stall ratio (SR), where no occurrence of engine stall is to be expected, the corridor (CO) comprising a lower stall boundary (LSB) and an upper stall boundary (USB), which depend on the acquired rotor torque (M_rotor) and rotor speed (n_rotor), and preferably on the acquired flight conditions (FC) and/or the acquired engine operation mode (EOM), and/or
wherein the stall boundary (SB) is defined in a stall map that preferably is stored as a lookup-table.

6. Method (10) according to any one of the preceding claims, wherein the method (10) is configured to recover the engine (1100) from an engine stall occurrence by modifying a control parameter (CP) of the engine (1100), and/or
the method (10) further comprises:
modifying a control parameter (CP) of the engine (1100) based on the comparison of the determined stall ratio (SR) with the stall boundary (SB), wherein preferably the control parameter (CP) is a demand set point of the rotor speed (n_rotor), of the rotor torque (M_rotor) and/or of a rotor output power to be generated by the engine (1100);
outputting the modified control parameter (CP) for controlling the engine (1100).

7. Method (10) according to claim 6, wherein the control parameter (CP) is modified if the determined stall ratio (SR) is below or above the stall boundary (SB), and/or
wherein modifying the control parameter (CP) comprises linearly and/or continuously ramping, decreasing or increasing the control parameter (CP) until the determined stall ratio (SR) is at, above and/or below the stall boundary (SB).

8. Method (10) according to any one of the preceding claims, wherein the rotor torque (M_rotor) of the engine (1100) is acquired by
- measuring the rotor torque (M_rotor) with a torque sensor (1300), which is arranged on the rotor (1130), and/or
- receiving an electric current reading representative of the rotor torque (M_rotor) from an electric motor (1150) that drives the rotor (1130) of the engine (1100) for generating thrust or preferably, from a control unit of said electric motor (1150).

9. Method (10) according to any one of the preceding claims, wherein the aircraft (2000) comprises at least two engines (1100), and the method (10) further comprises:
acquiring the rotor torque (M_rotor) and the rotor speed (n_rotor) of the rotor (1130) of each of the engines (1100) or of at least two neighbouring engines (1100), wherein preferably engine stall is detected for at least one of the neighbouring engines (1100);
preferably acquiring a relative position of the engines (1100) with respect to each other;
identifying an incorrect detection result (DR) for one or more of the engines (1100) by comparing and/or by cross-correlating the stall ratios (SR) of the respective engines (1100) with each other, respectively, and/or by determining if a difference between the determined stall ratios (SR) preferably in relation to their relative mounting position on the aircraft (2000) exceeds an acceptable variation threshold, and
preferably correcting the respective incorrect detection result (DR) before outputting the same as corrected detection result (CDR).

10. Computer program product comprising instructions which, when the program is executed by a computer, cause the computer to carry out the steps of the method (10) of any one of claims 1 to 9.

11. Control system (100) for detecting engine stall in an engine (1100) of a vertical take-off and landing aircraft (2000) under flight conditions (FC), the engine (1100) comprising a rotor (1130), the control system (100) comprising
a receiving section (120) for acquiring a rotor torque (M_rotor) and a rotor speed (n_rotor) of the rotor (1130),
a determining section (130) for determining a stall ratio (SR) between the acquired rotor torque (M_rotor) and rotor speed (n_rotor);
a comparison section (140) for comparing the determined stall ratio (SR) with a stall boundary (SB) for the engine (1100), which is based on the acquired rotor torque (M_rotor) and the rotor speed (n_rotor), for detecting occurring engine stall; and
an output section (150) for outputting a detection result (DR) based on the comparison of the determined stall ratio (SR) with the stall boundary (SB).

12. Propulsion system (1000) for a vertical take-off and landing aircraft (2000), comprising
- at least one engine (1100) with a rotor (1130), and
- the control system (100) according to claim 11.

13. Propulsion system (1000) according to claim 12, wherein the propulsion system (1000) comprises a plurality of the engines (1100), which are arranged on different mounting positions with respect to each other, and/or
wherein each of the engines (1100) is configured to be arranged movably, preferably swivably, between at least one hovering position and at least one cruising position on a wing of the aircraft (2000).

14. Propulsion system (1000) according to claim 12 or claim 13, comprising a propulsion unit housing (1110), which comprises at least two engine ducts (1116), wherein preferably each of the engine ducts (1116) comprises one of the engines (1100), and/or
wherein the engine (1100) comprises preferably an electrical fan engine for driving the rotor (1130), on which a fan (1120) is arranged for conveying air into the engine duct (1116) of the propulsion unit housing (1110), and/or
wherein the engine (1100) comprises a stator (1140) for compressing the conveyed air for generating thrust for propelling the aircraft (2000).

15. Aircraft (2000) for vertical take-off and landing comprising the propulsion system (1000) of any one of claims 12 to 14, and
preferably further comprising two nose wings (2101), such as canards, and two tail wings (2102), wherein each of the wings (2101, 2102) comprises at least one engine (1100) that is arranged to be movable, preferably swivable, between at least one hovering position and at least one cruising position.
